# EUROPEAN PATENT APPLICATION

(11) **EP 4 848 461 A1**
(43) Date of publication of application: **02.12.2026**
(21) Application number: 24929135.2
(22) Date of filing: 19.08.2024
(51) Int. Cl.: H01M 50/533, H01M 50/503, H01M 50/528, H01M 50/586

(54) **BATTERY CELL, BATTERY, AND ELECTRIC DEVICE**

(30) Priority: 11.03.2024 CN 202410276534
(71) Applicant: Contemporary Amperex Technology Co., Limited, Ningde, Fujian 352100 (CN)
(72) Inventor: LIN, Wenfa, Ningde, Fujian 352100 (CN); YU, Mingxi, Ningde, Fujian 352100 (CN); ZHANG, Long, Ningde, Fujian 352100 (CN)
(74) Representative: Ziebig Hengelhaupt Intellectual Property Attorneys Patentanwaltskanzlei PartGmbB
(86) International application number: PCT/CN2024/113188
(87) International publication number: WO 2025/189684

(57) **Abstract**

A battery cell, a battery, and an electric device. The battery cell (100) comprises: electrode assemblies (10), wherein each electrode assembly (10) comprises an electrode body (11) and a tab (12), the tab (12) comprises a first connecting portion (121), a bending portion (123), and a second connecting portion (122), the first connecting portion (121) is connected to the electrode body (11), and the first connecting portion (121) and the second connecting portion (122) are connected by means of the bending portion (123); and an adapter piece (20), wherein two side surfaces of the adapter piece (20) in the thickness direction respectively are a first surface (23) and a second surface (24), the first connecting portions (121) are arranged close to the second surface (24), the bending portions (123) are bent around the periphery of the adapter piece (20), and the second connecting portions (122) are arranged close to the first surface (23) and are fixed and electrically connected to the first surface (23).

## Description

### CROSS-REFERENCE TO RELATED APPLICATION

The present application is based on and claims priority to Chinese Patent Application No. 202410276534.0, filed on March 11, 2024, which is incorporated herein by reference in its entirety.

### TECHNICAL FIELD

The present application relates to the technical field of batteries, and in particular, to a battery cell, a battery, and an electrical device.

### BACKGROUND

During battery assembly, the tabs are usually connected to the terminal posts by welding through adapters. Due to design or manufacturing reasons, the tabs are usually quite long and will accumulate between the electrode body and the adapter, occupying a large space. As a result, when the size of the case is fixed, the size of the electrode body cannot be increased, making it difficult to improve the energy density of the battery cell. Moreover, when the space between the electrode body and the adapter is small, the electrode assembly has the problem of redundant tabs after being placed into the case, which easily leads to short circuit between the tabs and the electrode body and affects the reliability and stability of the battery cell.

### SUMMARY

The present application is intended to solve at least one of the technical problems existing in the prior art. To this end, the present application aims to provide a battery cell, a battery, and an electrical device, and the battery cell can improve the energy density and service life of the battery.

In a first aspect, an embodiment of the present application provides a battery cell. The battery cell comprises: an electrode assembly, the electrode assembly comprising an electrode body and a tab, the tab comprising a first connecting portion, a bending portion, and a second connecting portion, the first connecting portion being connected to the electrode body, and the first connecting portion and the second connecting portion being connected by means of the bending portion; and an adapter, two side surfaces of the adapter in the thickness direction respectively being a first surface and a second surface, the first surface being located on the side of the second surface facing away from the electrode body, the first connecting portion being arranged close to the second surface, the bending portion being bent around the periphery of the adapter, and the second connecting portion being arranged close to the first surface and being fixed and electrically connected to the first surface.

In the above technical solution, by setting the second connecting portion of the tab to be fixed and electrically connected to the first surface, the redundancy of the tab can be reduced, the compactness of the structure can be increased, and thus the energy density of the battery cell can be improved. At the same time, the probability of the second connecting portion of the tab coming into contact with the electrode body can be reduced, thereby effectively reducing the short circuit of the battery cell caused by the redundancy, sagging, loosening and other problems of the tab, thus effectively improving the performance and service life of the battery cell.

In some embodiments, the adapter has a circumferential side surface connected between the first surface and the second surface, wherein the portion of the circumferential side surface facing the bending portion is the first side surface, and the first side surface is arcuately connected to both the first surface and the second surface.

In the above technical solution, by setting the first side surface to be arcuately connected to both the first surface and the second surface, there is no sharp point at the connection between the first side surface and the first surface and the second surface. This can effectively reduce the stress at the contact point between the adapter and the tab, thereby reducing the probability of damage to the tab caused by the adapter.

In some embodiments, at least a part of the first side surface extends along an arc protruding toward the bending portion in the circumferential direction of the adapter.

In the above technical solution, at least a part of the first side surface is set to extend along an arc protruding toward the bending portion in the circumferential direction of the adapter, so that when the adapter is shifted due to external factors when it is fixedly connected to the tab, it will not crack the tab. This can reduce the probability of short circuit in the battery cell and improve the operational reliability of the battery cell.

In some embodiments, the circumferential side surface is arcuately connected to both the first surface and the second surface.

In the above technical solution, by setting the circumferential side surface to be arcuately connected to both the first surface and the second surface, the connection position between the adapter and the tab may not be limited, thereby reducing the production difficulty of the adapter and increasing the production rate of the adapter.

In some embodiments, the ratio of the radius of the fillet connecting the first side surface to the first surface and the second surface to the thickness of the adapter ranges from 1/4 to 1/2.

In the above technical solution, by setting the ratio of the radius of the fillet connecting the first side surface to the first surface and the second surface to the thickness of the adapter to range from 1/4 to 1/2, the arc at the connection position between the first side surface and the first surface and the second surface is not too small, effectively preventing sharp corners from forming at the connection position between the adapter and the tab, thereby reducing damage to the tab; this also ensures that the arc at the connection position between the first side surface and the first surface and the second surface is not too large, which is beneficial for the production of the adapter.

In some embodiments, the ratio of the radius of the fillet between the first side surface and the first surface and the second surface to the thickness of the adapter is 1/2.

In the above technical solution, by setting the ratio of the radius of the fillet between the first side surface and the first surface and the second surface to the thickness of the adapter to 1/2, the first side surface can be formed into a semi-circle. Here, the semi-circular structure is simple, which is beneficial for the production of the adapter, thereby improving the production convenience of the adapter.

In some embodiments, in the circumferential direction of the adapter, the first side surface includes: a first arc segment and a straight segment, the number of the first arc segments is two, the two first arc segments extend along an arc protruding toward the bending portion, and the straight segment connects between the two first arc segments and is tangent to the two first arc segments; or, in the circumferential direction of the adapter, the first side surface includes: a second arc segment and a recessed segment, the number of the second arc segments is two, the two second arc segments extend along an arc protruding toward the bending portion, and the recessed segment is recessed in a direction away from the bending portion and connects between the two second arc segments; or, in the circumferential direction of the adapter, the first side surface extends along an arc protruding toward the bending portion.

In the above technical solution, by providing two first arc segments and a straight segment, with the straight segment connecting between the two first arc segments and being tangent to the two first arc segments, the first side surface can be free of sharp points. Therefore, when the tab abuts against the first side surface, the first side surface will not damage the tab, thereby reducing the probability of short circuit in the battery cell and improving the operational reliability of the battery cell. By providing two second arc segments protruding toward the bending portion and a recessed segment connecting between the two second arc segments and recessed in a direction away from the bending portion, when the first side surface abuts against the tab, the tab only comes into contact with the protruding second arc segments. Therefore, when the adapter shifts due to external factors, the first side surface will not damage the tab, thereby reducing the probability of short circuit in the battery cell and improving the operational reliability of the battery cell. By setting the first side surface to extend along an arc protruding toward the bending portion, the tab can be protected more comprehensively, further reducing the probability of damage to the tab caused by the deflection of the adapter.

In some embodiments, the adapter is in the shape of a flat plate.

In the above technical solution, by setting the adapter to be in the shape of a flat plate, the manufacturing difficulty and manufacturing cost of the adapter can be reduced, thereby reducing the overall cost of the battery cell.

In some embodiments, the adapter includes: an adapter body and an encapsulating member, the encapsulating member covering at least a part of the periphery of the adapter body, and at least a part of the surface of the encapsulating member facing away from the adapter body being formed as the first side surface.

In the above technical solution, by providing an encapsulating member, the edge of the adapter body can be protected, thereby reducing the collision and wear of the adapter body on the tab and reducing damage to the tab.

In some embodiments, the encapsulating member extends circumferentially along the adapter body in an annular shape and completely encapsulates the periphery of the adapter body.

In the above technical solution, by setting the encapsulating member to extend circumferentially along the adapter body in an annular shape and completely encapsulate the periphery of the adapter body, the encapsulating member can protect the tab from a plurality of directions. This ensures that when the tab is connected to the adapter, even if the adapter rotates or shifts due to external factors, it will not damage the tab. At the same time, this can also make the adapter more visually complete and uniform, increasing the aesthetics of the adapter.

In some embodiments, in the thickness direction of the adapter body, the two ends of the encapsulating member extend respectively to the two side surfaces of the adapter body in the thickness direction.

In the above technical solution, by extending the two ends of the encapsulating member respectively to the two side surfaces of the adapter body in the thickness direction, the contact area between the encapsulating member and the adapter body can be increased, thereby increasing the stability of connection between the encapsulating member and the adapter body and reducing the risk of the encapsulating member falling off from the adapter body.

In some embodiments, the encapsulating member is a flexible material member.

In the above technical solution, by setting the encapsulating member to be a flexible material member, since the flexible material member can undergo elastic deformation, the encapsulating member can adapt to various installation conditions, thereby improving the encapsulating flexibility of the encapsulating member and increasing the applicability of the encapsulating member. At the same time, since the flexible material can also absorb and disperse the interaction force between the adapter and the tab to a certain extent, the force exerted by the adapter body on the tab or the force exerted by the tab on the adapter body can be reduced, thereby further reducing the risk of damage at the abutting position between the adapter body and the tab.

In some embodiments, the encapsulating member is a rubber member, a silica gel member or an ABS plastic member.

In the above technical solution, by setting the encapsulating member to be a rubber member, a silica gel member or an ABS plastic member, the possibility of the encapsulating member being corroded by electrolyte can be reduced, the reliability of the encapsulating member throughout the entire life cycle of the battery cell can be improved, and the service life of the encapsulating member can be increased; at the same time, the production cost of the encapsulating member can be reduced, thereby reducing the production cost of the battery cell.

In some embodiments, the adapter has two first side surfaces arranged opposite to each other in the width direction of the adapter.

In the above technical solution, by setting the adapter to have two first side surfaces and the two first side surfaces to be arranged opposite to each other in the width direction of the adapter, the adapter can be electrically connected to the two tabs, and a certain gap is formed between the two tabs, so that the two tabs will not come into contact, thereby reducing the risk of short circuit of the battery cell.

In some embodiments, the circumferential side surface further includes a second side surface and a third side surface. In the circumferential direction of the adapter, the second side surface and the third side surface are respectively arranged at two ends of the first side surface and are connected to the first side surface at an angle. Both the second side surface and the third side surface are arcuately connected to the first side surface.

In the above technical solution, by setting both the second side surface and the third side surface to be arcuately connected to the first side surface, the sharp points at the periphery of the adapter can be further reduced, and the possibility of damage to the tab caused by the adapter can be further reduced.

In some embodiments, the adapter is formed as a single-layer plate.

In the above technical solution, by setting the adapter to be formed as a single-layer plate, the thickness of the adapter can be reduced, thereby reducing the space occupied by the adapter. This can increase the arrangement space of the electrode assembly in the battery case, thereby increasing the energy density of the battery cell. At the same time, the single-layer plate has a simple structure and low cost, which can also reduce the production cost of the adapter, thereby reducing the production cost of the whole battery cell.

In some embodiments, the adapter includes a third connecting portion used for being electrically connected to the terminal post of the battery cell; and a second connecting portion fixedly connected to the third connecting portion, the second connecting portion being used for being electrically connected to the tab.

In the above technical solution, by providing the third connecting portion and the second connecting portion, the connection positions between the tab and the terminal post and the adapter can be limited respectively, which can increase the assembly convenience of the battery cell.

In some embodiments, both the third connecting portion and the second connecting portion are sheet-shaped, and the third connecting portion and the second connecting portion are arranged in the same plane.

In the above technical solution, by setting both the third connecting portion and the second connecting portion to be sheet-shaped, and arranging the third connecting portion and the second connecting portion in the same plane, the adapter is formed into a flat plate shape. The flat plate shape has a simple structure and is easy to manufacture, thereby reducing the manufacturing cost of the adapter and increasing the manufacturing rate of the adapter.

In some embodiments, a part of the adapter protrudes toward the terminal post to be formed as a third connecting portion.

In the above technical solution, by setting a part of the adapter to protrude toward the terminal post to be formed as a third connecting portion, the third connecting portion can be connected to the terminal post more tightly. This increases the tightness of the connection between the adapter and the terminal post and improves the reliability of current transmission between the adapter and the terminal post.

In some embodiments, the third connecting portion includes a connecting body and a bent segment, the connecting body being arranged on the side of the second connecting portion facing the terminal post, the bent segment extending along the thickness direction of the adapter and being connected to the connecting body and the second connecting portion respectively at two ends.

In the above technical solution, by providing a bent segment, a certain gap can be formed between the connecting body and the second connecting portion in the thickness direction of the adapter. This can increase the adaptability of the third connecting portion without affecting the fixed connection between the adapter and the tab, so that the third connecting portion can adapt to different types of terminal posts.

In some embodiments, the number of the second connecting portions is two, wherein the two second connecting portions are connected and arranged side by side on the same side of the third connecting portion; or, the two second connecting portions are arranged on opposite sides of the third connecting portion.

In the above technical solution, by providing two second connecting portions, the connecting piece can be electrically connected to the two tabs. This can disperse the current density, reduce local resistance, thereby improving the current conduction efficiency during high-current charging and discharging, reducing heat generation, and improving the performance of the battery cell. By setting the two second connecting portions to be connected and arranged side by side on the same side of the third connecting portion, or by arranging the two second connecting portions on opposite sides of the third connecting portion, the adapter can be designed according to the actual arrangement requirements inside the battery cell, so that it can meet the requirements of various battery cells, thus increasing the applicability of the adapter.

In some embodiments, a foolproof structure is formed on the adapter, which is suitable for providing the adapter with foolproof during assembly.

In the above technical solution, by forming a foolproof structure on the adapter, it can be ensured that the adapter can be installed correctly, reducing the occurrence of electrical connection failures, short circuits, etc. caused by incorrect installation direction, reversed positions of positive and negative electrode adapters, and the like.

In some embodiments, the foolproof structure is formed on one side periphery of the adapter.

In the above technical solution, by setting the foolproof structure to be formed on one side periphery of the adapter, the production of the adapter can be facilitated and the production difficulty of the adapter can be reduced. At the same time, the foolproof structure will not affect the electrical connection between the adapter and the terminal post and the tab, thereby ensuring stability of the electrical connection in the battery cell.

In some embodiments, the foolproof structure is formed on the side periphery of the adapter facing away from the first side surface.

In the above technical solution, by setting the foolproof structure to be formed on the side periphery of the adapter facing away from the first side surface, the foolproof structure will not affect the first side surface. In this way, while ensuring that the adapter can be installed correctly, the stress at the contact position between the adapter and the tab can be effectively reduced, thereby reducing the probability of damage to the tab caused by the adapter.

In some embodiments, the adapter includes a third connecting portion and a fourth connecting portion. The third connecting portion is fixed and electrically connected to the terminal post, and the fourth connecting portion is fixed and electrically connected to the second connecting portion of the tab. In the circumferential direction of the adapter, the side of the fourth connecting portion facing the bending portion is formed as a first side surface, the side of the fourth connecting portion adjacent to the first side surface is formed as a third side surface, and the side of the fourth connecting portion facing away from the first side surface is formed as a fourth side surface. The third side surface connects the first side surface and the fourth side surface. The number of the fourth connecting portions is two. The third side surface and the fourth side surface of one of the fourth connecting portions are rounded, and the third side surface and the fourth side surface of the other fourth connecting portion are chamfered to form a foolproof structure.

In the above technical solution, by setting the third side surface and the fourth side surface of the fourth connecting portion to be chamfered to form a foolproof structure, the manufacturing difficulty of the adapter can be reduced, thereby reducing the manufacturing cost of the adapter and increasing the manufacturing rate of the adapter; at the same time, while ensuring that the adapter can be installed correctly, the foolproof structure will not affect the connection between the tab and the adapter, thereby ensuring stability of the electrical connection of the battery cell.

In some embodiments, the battery cell further includes: an end cover assembly and a terminal post; the end cover assembly including an end cover and a first insulating member, the first insulating member being arranged on the side of the end cover facing the electrode assembly, the terminal post passing through the end cover assembly and being fixed and electrically connected to the adapter; and the adapter body includes: a third connecting portion and a fourth connecting portion, the third connecting portion being fixed and electrically connected to the terminal post, and the fourth connecting portion being fixed and electrically connected to the second connecting portion of the tab; wherein the gap between the first insulating member and the fourth connecting portion is greater than the thickness of the second connecting portion of the tab.

In the above technical solution, by setting the gap between the first insulating member and the fourth connecting portion to be greater than the thickness of the second connecting portion of the tab, it can be ensured that the tab will not abut against the first insulating member. This can effectively prevent the adapter from moving toward one side of the electrode body due to abutting of the tab against the first insulating member, thereby further improving the tightness of the connection between the third connecting portion and the terminal post.

In some embodiments, the ratio of the gap between the first insulating member and the fourth connecting portion to the thickness of the second connecting portion of the tab is greater than or equal to 1.2.

In the above technical solution, by setting the ratio of the gap between the first insulating member and the fourth connecting portion to the thickness of the second connecting portion of the tab greater than or equal to 1.2, it can be further ensured that the tab will not abut against the first insulating member, thereby reducing the probability of damage to the tab due to crushing. At the same time, it can also further prevent space from being produced between the third connecting portion and the terminal post and affecting the tightness of the connection between the third connecting portion and the terminal post, thereby ensuring the transmission stability of the adapter and improving the operational reliability of the battery cell.

In some embodiments, the third connecting portion is connected to the terminal post by laser welding; and the fourth connecting portion is connected to the second connecting portion of the tab by ultrasonic welding.

In the above technical solution, the third connecting portion is connected to the terminal post by laser welding, and the fourth connecting portion is connected to the second connecting portion of the tab by ultrasonic welding. This can increase the quality of the welding between the adapter and the terminal post and the tab, and improve stability of the connection between the adapter and the terminal post and tab.

In some embodiments, the third connecting portion has at least one first welding area, and the third connecting portion is welded and connected to the terminal post through the first welding area; and the fourth connecting portion has at least one second welding area, and the fourth connecting portion is welded and connected to the tab through the second welding area.

In the above technical solution, by providing a first welding area and a second welding area, the welding position between the adapter and the tab and the terminal post can be further defined, making the welding position more precise, thereby further increasing the convenience and reliability of the connection between the adapter and the tab and the terminal post; at the same time, a plurality of first welding areas and a plurality of second welding areas can also increase the welding area between the adapter and the terminal post and the tab, thereby increasing stability of the welding between the adapter and the tab and the terminal post.

In some embodiments, a plurality of welding grooves arranged in an array are formed in the second welding area by welding.

In the above technical solution, with the expression "a plurality of welding grooves arranged in an array are formed in the second welding area by welding", it can be understood that the tab and the adapter are connected by a plurality of weld points. The plurality of weld points can effectively disperse the current density, reduce resistance, and prevent welding failure caused by local overheating. Therefore, the formation of a plurality of welding grooves arranged in an array in the second welding area can significantly improve the energy transmission efficiency and overall reliability of the battery cell.

In some embodiments, the welding groove is a square groove or a hemispherical groove.

In the above technical solution, by making the welding groove a square groove or a hemispherical groove, the ultrasonic welding head can be selected according to the actual situation of the tab and the adapter. This can further improve the quality of the welding between the tab and the adapter and reduce the risk of product damage.

In some embodiments, the battery cell further includes a protective sheet provided on the side of the second connecting portion of the tab facing away from the electrode body and connected to the second connecting portion of the tab.

In the above technical solution, by providing a protective sheet, the tab can be protected when the tab is being welded and connected to the adapter, reducing the risk of the tab cracking during the welding process, and thus reducing the probability of damage to the battery cell during assembly.

In a second aspect, an embodiment of the present application further provides a battery, which comprises the battery cell according to the first aspect of the present application.

The battery according to the present application is provided with the battery in the above first aspect, thereby improving the overall performance of the electrical apparatus. In a third aspect, an embodiment of the present application further provides an electrical apparatus, which comprises the battery according to the second aspect of the present application, and the battery is configured to provide electric energy.

The electrical apparatus according to the present application is provided with the battery in the above second aspect, thereby improving the overall performance of the electrical apparatus.

Additional aspects and advantages of the present application will be set forth in part in the description which follows, and in part will be obvious from the description which follows, or will be learned by practice of the present application.

### BRIEF DESCRIPTION OF DRAWINGS

FIG. 1 is a schematic view of a vehicle according to an embodiment of the present application;
FIG. 2 is a schematic view of a battery according to an embodiment of the present application;
FIG. 3 is an exploded view of a battery according to an embodiment of the present application;
FIG. 4 is a sectional view of a battery cell according to an embodiment of the present application;
FIG. 5 is a schematic partial view of a battery cell according to an embodiment of the present application;
FIG. 6 is a schematic partial view of a battery cell from another perspective according to an embodiment of the present application;
FIG. 7 is a schematic partial view of a battery cell from yet another perspective according to an embodiment of the present application;
FIG. 8 is a schematic partial view of a battery cell according to another embodiment of the present application;
FIG. 9 is a schematic partial view of a battery cell according to yet another embodiment of the present application;
FIG. 10 is a schematic partial view of a battery cell according to still another embodiment of the present application; and
FIG. 11 is a schematic view of an adapter according to an embodiment of the present application.

### Reference numerals:

1: vehicle;
1000: battery;
100: battery cell;
10: electrode assembly; 11: electrode body; 12: tab; 121: first connecting portion; 122: second connecting portion; 123: bending portion;
20: adapter; 21: third connecting portion; 211: connecting body; 212: bent segment; 213: first welding area; 22: fourth connecting portion; 221: second welding area; 222: welding groove; 23: first surface; 24: second surface; 25: first side surface; 26: second side surface; 27: third side surface; 28: fourth side surface; 29: foolproof structure;
30: end cover assembly; 31: end cover; 32: first insulating member;
40: terminal post;
50: protective sheet;
200: box; 201: first box body; 202: second box body;
2000: controller; 3000: motor.

### DETAILED DESCRIPTION

Embodiments in technical solutions of the present application will be described in detail below in conjunction with the accompanying drawings. The following embodiments are only configured to illustrate the technical solutions of the present application more clearly, and thus are only interpreted as examples, rather than configured to limit the scope of protection of the present application.

Unless otherwise defined, all technical and scientific terms used herein have the same meanings as generally understood by those skilled in the art of the present application; the terms used herein are intended only to describe specific embodiments and are not intended to limit the present application; and the terms "including" and "having" and any variations thereof in the description and claims of the present application and in the foregoing description of the accompanying drawings are intended to cover non-exclusive inclusions.

In the descriptions of the embodiments of the present application, the technical terms "first," "second," and the like are used only for distinguishing between different objects, and are not to be understood as indicating or implying a relative importance or implicitly specifying the number, particular order, or primary and secondary relation of the technical features indicated. In the description of the embodiments of the present application, the meaning of "a plurality of" is two or more, unless otherwise explicitly and specifically defined.

Reference to "an embodiment" herein means that a particular feature, structure, or characteristic described with reference to an embodiment may be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is merely an association that describes the associated objects, indicating that there may be three kinds of relationships, such as A and/or B may indicate the following three situations: A exists alone, A and B exist at the same time, and B exists alone. In addition, the character "/" herein generally means that there is an "or" relationship between associated objects therebefore and thereafter.

In the description of the embodiments of the present application, the term "plurality of" means more than two (including two).

In the description of the embodiments of the present application, the directions or positional relationships indicated by the technical terms, such as "center," "longitudinal," "transverse," "length," "width," "thickness," "above," "below," "front," "back," "left," "right," "vertical," "horizontal," "top," "bottom," "inner," "outer," "axial," "radial," and "circumferential," are based on the directions or positional relationships shown in the drawings, are only provided to facilitate describing the embodiments of the present application and simplifying the description, rather than indicating or implying that the apparatus or element referred to must have a particular direction, or be configured and operated in a particular direction, and therefore cannot be construed as limiting the embodiments of the present application.

In the description of the embodiments of the present application, unless otherwise explicitly specified and defined, the technical terms, such as "mounting," "joining," "connecting" and "fixing" should be understood in a broad sense, for example, they may be fixed connection, detachable connection, or integration; or they may be mechanical connection or electrical connection; or they may be direct connection, indirect connection through an intermediate medium, or internal connection of two elements or interaction relationship between two elements. For those of ordinary skill in the art, the specific meanings of the above terms in the embodiments of the present application may be understood according to specific situations.

Currently, from the development of market situation, the application of power batteries is becoming increasingly more extensive. Power batteries not only have been applied to energy storage power source systems such as hydraulic, firepower, wind and solar power stations, but also have been widely applied to many fields, e.g., electric transportation vehicles such as electric bicycles, electric motorcycles, and electric automobiles, as well as military equipment and aerospace. With the continuous expansion of the application field of power batteries, their market demand is also constantly increasing.

When a battery cell in the related art is manufactured, a current collector is coated with an active material layer and then cut to obtain an electrode plate consisting of the current collector coated with the active material layer (denoted as an electrode body) and the current collector not coated with the active material layer (denoted as a tab plate). Then, positive and negative electrode plates and a separator are sequentially stacked or wound to obtain an electrode assembly. A plurality of tab plates in the electrode assembly are stacked to form a tab. The battery cell is manufactured generally by indirectly welding the tab to the terminal post through an adapter to ensure normal charge-discharge operations.

However, due to design or manufacturing reasons, the tabs are usually quite long. The tabs will accumulate between the electrode body and the adapter, occupying a large space. As a result, when the size of the case is fixed, the size of the electrode body cannot be increased, making it difficult to improve the energy density of the battery cell. Moreover, when the space between the electrode body and the adapter is small, the electrode assembly has the problem of redundant tabs after being placed into the case, which easily leads to short circuit between the tabs and the electrode body and affects the reliability and stability of the battery cell.

Based on the above considerations, in order to reduce the space occupied by the tabs to improve the power density of the battery cell and solve the problem of short circuits caused by the tabs being too long and overlapping with the electrode plates, a battery cell is designed. The battery cell includes an electrode assembly and an adapter. The adapter has a first surface and a second surface in the thickness direction. The electrode assembly includes a tab and an electrode body. The first connecting portion of the tab is connected to the electrode body, and the second connecting portion is fixed around the periphery of the adapter and facing away from the first surface of the electrode body. In this way, the path connecting the tab and the adapter can be extended, which can reduce the length of the tab and reduce the space occupied by the tab, thereby improving the energy density of the battery cell. At the same time, the adapter can support the tab, keeping the tab in good shape and preventing redundancy or sagging. This reduces the probability of the second connecting portion of the tab coming into contact with the electrode body, thereby reducing the probability of short circuits in the battery cell and improving the service life of the battery cell.

The adapter disclosed in the present application can be used in an electrical apparatus that uses the battery as a power source or in various energy storage systems that use the battery pack as an energy storage element. The electrical apparatus can be, but is not limited to, a mobile phone, a tablet computer, a notebook computer, an electric toy, an electric tool, a battery vehicle, an electric automobile, a ship, a spacecraft and the like. Here, the electric toy can include a fixed or mobile electric toy, such as a game machine, an electric automobile toy, an electric ship toy and an electric aircraft toy, and the spacecraft can include an aircraft, a rocket, a space shuttle, a spacecraft and the like.

In the following embodiments, for the sake of convenience, a vehicle is used as an example of the electrical apparatus to describe the structure of the electrical apparatus, the battery, the battery cell, and the adapter in the present application in detail.

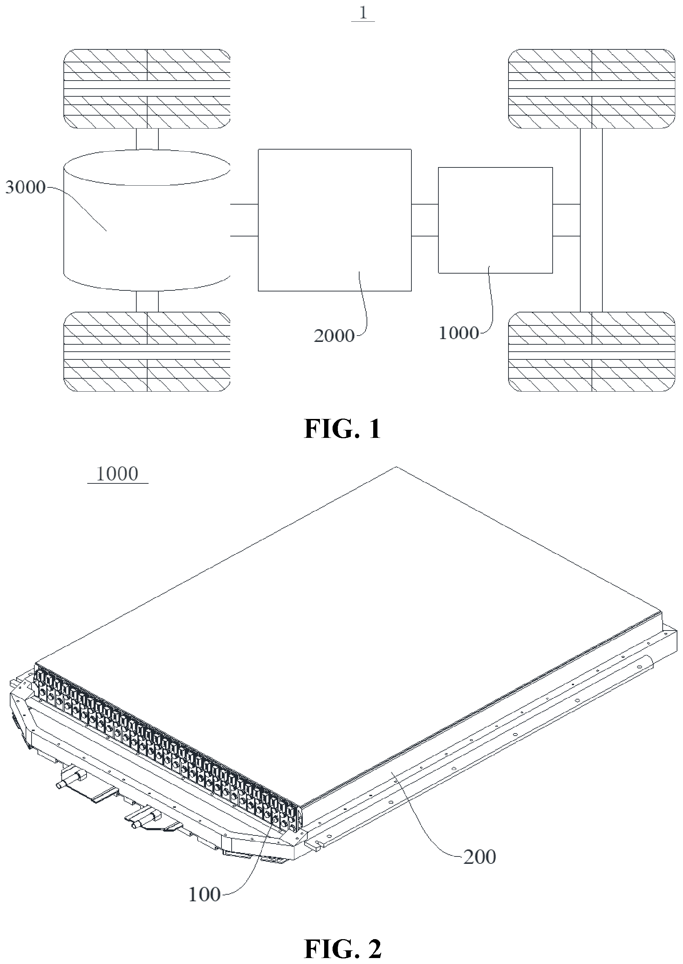

Referring to FIG. 1, FIG. 1 is a schematic structural view of a vehicle 1 serving as an electrical apparatus provided by some embodiments of the present application. The vehicle 1 may be a fuel vehicle, a gas vehicle or a new energy vehicle. The new energy vehicle may be a all-electric vehicle, a hybrid electric vehicle, an extended range electric vehicle, or the like. A battery 1000 is provided in the vehicle 1. The battery 1000 may be arranged at the bottom or head or tail of the vehicle 1. The battery 1000 may be configured to power the vehicle 1, for example, the battery 1000 may serve as an operating power source of the vehicle 1. The vehicle 1 may further comprise a controller 2000 and a motor 3000. The controller 2000 is configured to control the battery 1000 to power the motor 3000, for example, serve to satisfy operating power demand when the vehicle 1 is starting, navigating, and running. In some embodiments of the present application, the battery 1000 not only can serve as an operating power source of the vehicle 1, but also can serve as a driving power source of the vehicle 1, to provide driving power for the vehicle 1 in place of or partially in place of fuel or natural gas.

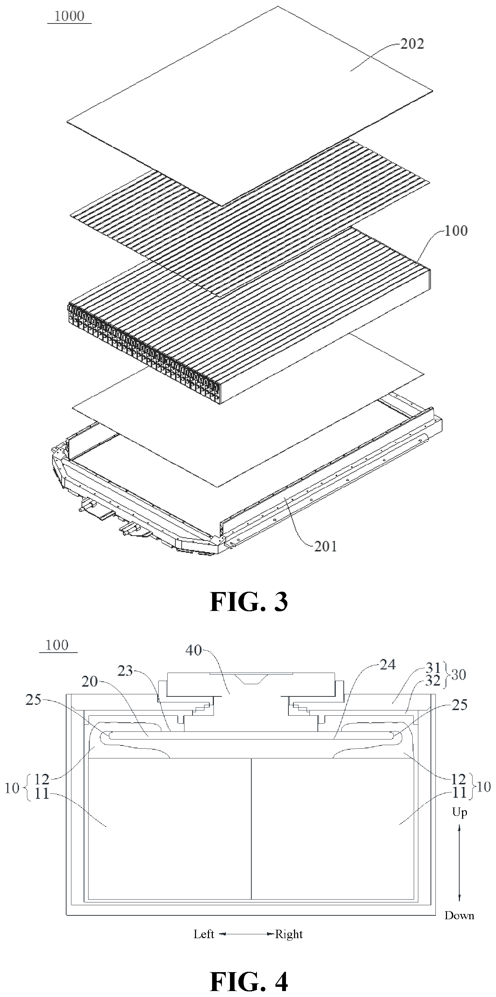

Referring to FIGS. 2 and 3, FIG. 2 is a schematic view of the battery 1000 provided by some embodiments of the present application, and FIG. 3 is an exploded structural view of a battery cell 100 used for the battery 1000 provided by some embodiments of the present application. The battery 1000 includes a box 200 and a plurality of battery cells 100, where the battery cells 100 are accommodated in the box 200. Here, the box 200 is configured to provide an assembling space for the battery cells 100, and the box 200 may be of a variety of structures. In some embodiments, the box 200 may include a first box body 201 and a second box body 202. The first box body 201 and the second box body 202 cover each other, and the first box body 201 and the second box body 202 together define an assembling space for accommodating the battery cells 100. The second box body 202 may be of a hollow structure with one open end. The first box body 201 may be of a plate-shaped structure. The first box body 201 covers the open side of the second box body 202, to enable the first box body 201 and the second box body 202 to jointly define an assembling space. Alternatively, both the first box body 201 and the second box body 202 are of a hollow structure with one open side (as shown in FIG. 3). The open side of the first box body 201 covers the open side of the second box body 202. Of course, the box 200 formed by the first box body 201 and the second box body 202 may be in a variety of shapes, such as a cylinder, a rectangular solid, or the like.

In the battery 1000, the plurality of battery cells 100 may be connected in series or in parallel or be in parallel-series connection. The parallel-series connection means that some of the plurality of battery cells 100 are connected in series and some in parallel. The plurality of battery cells 100 can be directly connected in series or in parallel or in parallel-series connection, and then the whole body formed by the plurality of battery cells 100 is accommodated in the box 200; or, the battery 1000 can alternatively include the plurality of battery cells 100 connected in series or in parallel or in parallel-series connection to constitute a form of battery module, and then a plurality of battery modules are connected in series or in parallel or in parallel-series connection to form a whole body which is accommodated in the box 200. The battery 1000 may further include other structures. For example, the battery 1000 may further include a busbar component configured to achieve electrical connection among the plurality of battery cells 100.

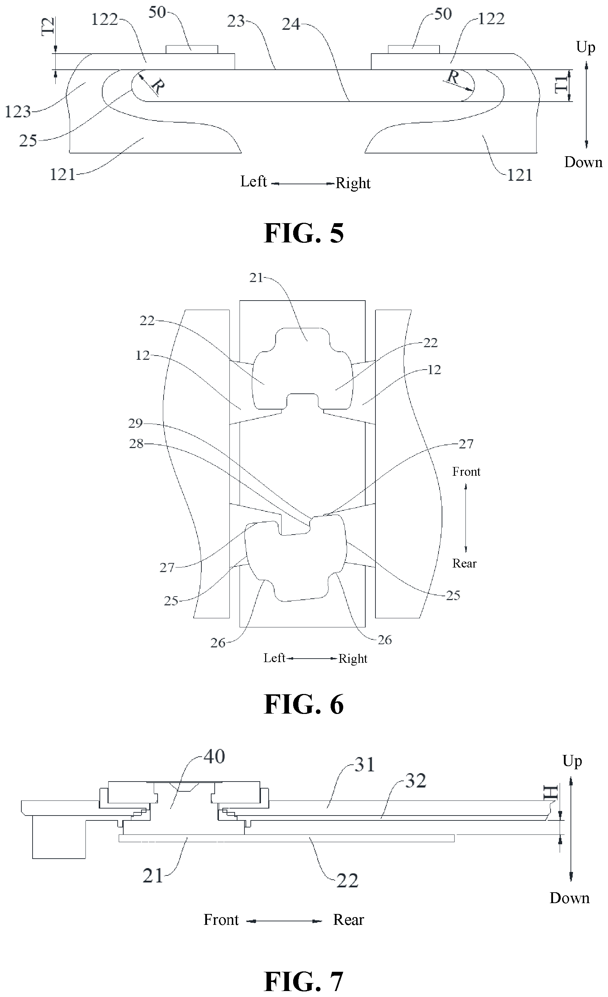

Referring to FIGS. 4 to 6, FIG. 4 is a sectional view of a battery cell 100 provided by some embodiments of the present application; FIG. 5 is a schematic partial view of a battery cell 100 provided by some embodiments of the present application; and FIG. 6 is a schematic partial view of a battery cell 100 from another perspective provided by some embodiments of the present application. In the embodiments of the present application, the adapter 20 is used for the battery cell 100. The battery cell 100 includes an electrode assembly 10 and an adapter 20. The electrode assembly 10 includes an electrode body 11 and a tab 12. The tab 12 includes a first connecting portion 121, a bending portion 123, and a second connecting portion 122. The first connecting portion 121 of the tab 12 is connected to the electrode body 11, and the first connecting portion 121 and the second connecting portion 122 are connected through the bending portion 123.

Specifically, the electrode assembly 10 is the core component of the battery cell 100 and is the component in the battery cell 100 where electrochemical reactions occur. It is usually formed by stacking or winding the electrode plates and the separator. Here, the part of the electrode plate containing active material constitutes the electrode body 11 of the electrode assembly 10. The electrode body 11 can assist in the intercalation and deintercalation of metal ions during the charging and discharging process of the battery cell 100. The part of the electrode plate without active material constitutes the tab 12, which is mainly used for electrical connection with the terminal post 40 of the battery cell 100 so that the charging and discharging operation of the battery cell 100 can be carried out.

It should be noted that, the electrode plates generally include a positive electrode plate and a negative electrode plate. The positive electrode plate includes a positive electrode current collector and a positive electrode active material layer, a surface of the positive electrode current collector is coated with the positive electrode active material layer, the positive electrode current collector not coated with the positive electrode active material layer protrudes from the positive electrode current collector coated with the positive electrode active material layer, and the positive electrode current collector not coated with the positive electrode active material layer serves as a positive tab 12. Taking a lithium-ion battery 1000 as an example, the material of the positive electrode current collector may be aluminum, and the positive electrode active material may be lithium cobalt oxide, lithium iron phosphate, ternary lithium, lithium manganate, or the like.

The negative electrode plate includes a negative electrode current collector and a negative electrode active material layer, a surface of the negative electrode current collector is coated with the negative electrode active material layer, the negative electrode current collector not coated with the negative electrode active material layer protrudes from the negative electrode current collector coated with the negative electrode active material layer, and the negative electrode current collector not coated with the negative electrode active material layer serves as a negative tab 12. The material of the negative electrode current collector may be copper, and the negative electrode active material may be carbon, silicon, or the like.

The adapter 20 is mainly used to connect the tab 12 and the terminal post 40, so as to effectively transfer the energy generated inside the battery cell 100 to the outside. Generally, there are at least two adapters 20, specifically at least one positive electrode adapter and at least one negative electrode adapter. For example, when there are two adapters 20, one is a positive electrode adapter and the other is a negative electrode adapter. The positive electrode adapter is used for connection with the positive tab and the positive terminal post, and the negative electrode adapter is used for connection with the negative tab and the negative terminal post.

For the convenience of description, description of the embodiments in the present application will not distinguish between the terminal posts 40, the tabs 12 and the adapters 20 and the like for the positive and negative electrodes. The terminal post 40, the tab 12 and the adapter 20 and the like and the related descriptions involved in the embodiments of the present application can be applied to structures such as the positive tab, the positive terminal post, the positive electrode adapter, or to structures such as the negative tab, the negative terminal post, the negative electrode adapter, or to structures such as the positive and negative tabs, the positive and negative terminal posts and the positive and negative electrode adapters.

Referring to FIG. 4, in the embodiments of the present application, two side surfaces of the adapter 20 in the thickness direction respectively are a first surface 23 and a second surface 24, the first surface 23 is located on the side of the second surface 24 facing away from the electrode body 11, the first connecting portion is arranged close to the second surface, the bending portion 123 is bent around the periphery of the adapter 20, and the second connecting portion 122 is arranged close to the first surface and is fixed and electrically connected to the first surface 23.

It can be understood that, the tab 12 is bent from the periphery of the adapter 20 to the side surface of the adapter facing away from the electrode body 11 and fixed and electrically connected thereto. This increases the path for the fixed connection between the tab 12 and the adapter 20, which can reduce the redundancy of the tab 12, increase the compactness of the structure, and thus improve the energy density of the battery cell 100. At the same time, since the first surface 23 faces away from the electrode body 11, the adapter 20 can support the tab 12, keeping the tab 12 in good shape and preventing redundancy, sagging, etc. This reduces the probability of the second connecting portion 122 of the tab 12 coming into contact with the electrode body 11, and thus effectively reduces the possibility of short circuits in the battery cell 100 caused by redundancy, sagging, loosening, etc. of the tab 12, thereby effectively improving the performance and service life of the battery cell 100.

In the above technical solution, by setting the second connecting portion 122 of the tab 12 to be fixed and electrically connected to the first surface 23, the redundancy of the tab 12 can be reduced, the compactness of the structure can be increased, and thus the energy density of the battery cell can be improved. At the same time, the probability of the second connecting portion 122 of the tab 12 coming into contact with the electrode body 11 can be reduced, thereby effectively reducing the short circuit of the battery cell 100 caused by the redundancy, sagging, loosening and other problems of the tab 12, thus effectively improving the performance and service life of the battery cell 100.

Referring to FIG. 4 again, in some embodiments, the adapter 20 has a circumferential side surface connected between the first surface 23 and the second surface 24, wherein the portion of the circumferential side surface facing the bending portion 123 is the first side surface 25, and the first side surface 25 is arcuately connected to both the first surface 23 and the second surface 24.

Specifically, the expression "the first side surface 25 is arcuately connected to both the first surface 23 and the second surface 24" is intended to mean that the first side surface 25 is connected to the first surface 23 and the second surface 24 by a non-right angle, and the first side surface 25 is connected to the first surface 23 and the second surface 24 in smooth transition without any sharp point at the connection. This can effectively reduce the stress at the contact point between the adapter 20 and the tab 12, thereby reducing the probability of damage to the tab 12 caused by the adapter 20.

In the above technical solution, by setting the first side surface 25 to be arcuately connected to both the first surface 23 and the second surface 24, there is no sharp point at the connection between the first side surface 25 and the first surface 23 and the second surface. This can effectively reduce the stress at the contact point between the adapter 20 and the tab 12, thereby reducing the probability of damage to the tab 12 caused by the adapter 20.

Referring to FIG. 4 again, in some embodiments, at least a part of the first side surface 25 extends along an arc protruding toward the bending portion 123 in the circumferential direction of the adapter 20.

With the expression "at least a part of the first side surface 25 extends along an arc protruding toward the bending portion 123 in the circumferential direction of the adapter 20", it can be understood that, in the circumferential direction of the adapter 20, the first side surface 25 may extend partially along an arc protruding toward the bending portion 123, or it may extend entirely along an arc protruding toward the bending portion 123. By way of example, referring to FIG. 6, by setting the first side surface to extend entirely along the arc protruding toward the bending portion 123, the tab 12 can be protected more comprehensively, further reducing the probability of damage to the tab 12 caused by the deflection of the adapter 20.

In addition, it should be noted that the extension of the first side surface 25 along the arc protruding toward the bending portion 123 can make the first side surface 25 be formed in various forms. For example, in some specific embodiments, the two ends of the first side surface 25 in the circumferential direction are formed as arc surfaces protruding toward the bending portion 123, and the middle part is formed as a plane or an arc surface protruding toward the side facing away from the bending portion 123. In this way, even if when the adapter 20 is fixedly connected to the tab 12, the adapter 20 is shifted due to external factors, it will not crack the tab 12. This can reduce the probability of short circuit of the battery cell 100 and improve the operational reliability of the battery cell 100.

In the above technical solution, by setting at least a part of the first side surface 25 to extend along an arc protruding toward the bending portion 123 in the circumferential direction of the adapter 20, when the adapter 20 is fixedly connected to the tab 12, it is shifted due to external factors, it will not crack the tab 12. This can reduce the probability of short circuit in the battery cell 100 and improve the operational reliability of the battery cell 100.

In some embodiments, the circumferential side surface is arcuately connected to both the first surface 23 and the second surface 24.

In other words, the connection points between all circumferential side surfaces of the adapter 20 and the first surface 23 and the second surface 24 are not in right angle or hard edge transition, but in arc transition.

In the above technical solution, by setting the circumferential side surface to be arcuately connected to both the first surface 23 and the second surface 24, the connection position between the adapter 20 and the tab 12 may not be limited, thereby reducing the production difficulty of the adapter 20 and increasing the production rate of the adapter 20.

Referring to FIG. 5 again, in some embodiments, the ratio of the radius of the fillet connecting the first side surface 25 to the first surface 23 and the second surface 24 to the thickness of the adapter 20 ranges from 1/4 to 1/2.

Here, the fillet radius refers to the radius of the circular surface formed by the connection of two intersecting planes.

For example, the ratio of the radius R of the fillet connecting the first side surface 25 to the first surface 23 and the second surface 24 to the thickness T1 of the adapter 20 can be 1/4, 3/8 or 1/2.

In the above technical solution, by setting the ratio of the radius of the fillet connecting the first side surface 25 to the first surface 23 and the second surface 24 to the thickness of the adapter 20 to range from 1/4 to 1/2, the arc at the connection position between the first side surface 25 and the first surface 23 and the second surface 24 is not too small, effectively preventing sharp corners from forming at the connection position between the adapter 20 and the tab 12, thereby reducing damage to the tab 12; this also ensures that the arc at the connection position between the first side surface 25 and the first surface 23 and the second surface 24 is not too large, which is beneficial for the production of the adapter 20.

Referring to FIG. 5 again, in some embodiments, the ratio of the radius of the fillet between the first side surface 25 and the first surface 23 and the second surface 24 to the thickness of the adapter 20 is 1/2.

That is, the radius of the fillet between the first side surface 25 and the first surface 23 is half the thickness of the adapter 20, and the radius of the fillet between the first side surface 25 and the second surface 24 is also half the thickness of the adapter 20. The first side surface 25 connects the first surface 23 and the second surface 24, so the first side surface 25 can be formed into a semi-circle.

In the above technical solution, by setting the ratio of the radius of the fillet between the first side surface 25 and the first surface 23 and the second surface 24 to the thickness of the adapter 20 to 1/2, the first side surface 25 can be formed into a semi-circle. Here, the semi-circular structure is simple, which is beneficial for the production of the adapter 20, thereby improving the production convenience of the adapter 20.

In some embodiments, in the circumferential direction of the adapter 20, the first side surface 25 includes: a first arc segment and a straight segment. The number of first arc segments is two. The two first arc segments extend along an arc protruding toward the bending portion 123. The straight segment connects between the two first arc segments and is tangent to the two first arc segments.

Here, with the expression "the straight segment connects between the two first arc segments and is tangent to the two first arc segments", it can be understood that the two first arc segments are arranged at two ends of the first side surface 25 in the circumferential direction, and there is a smooth transition between the straight segment and the two first arc segments without sharp points, so that when the tab 12 abuts against the first side surface 25, the first side surface 25 will not damage the tab 12, thereby reducing the probability of short circuit in the battery cell 100 and improving the operational reliability of the battery cell 100.

In the above technical solution, by providing two first arc segments and a straight segment, with the straight segment connecting between the two first arc segments and being tangent to the two first arc segments, the first side surface 25 can be free of sharp points. Therefore, when the tab 12 abuts against the first side surface 25, the first side surface 25 will not damage the tab 12, thereby reducing the probability of short circuit in the battery cell 100 and improving the operational reliability of the battery cell 100.

In some other embodiments, in the circumferential direction of the adapter 20, the first side surface 25 includes: a second arc segment and a recessed segment. The number of second arc segments is two. The two second arc segments extend along an arc protruding toward the bending portion 123. The recessed segment is recessed in a direction away from the bending portion 123 and is connected between the two second arc segments.

Here, the two second arc segments extend along an arc protruding toward the bending portion 123, while the recessed segment is recessed in a direction away from the bending portion 123. It can be understood that the two second arc segments are closer to the bending portion 123 than the recessed segment. Therefore, when the first side surface 25 abuts against the tab 12, the tab 12 will first come into contact with the two second arc segments. The two second arc segments will prevent the bending portion 123 from continuing to move toward the adapter 20. As a result, the tab 12 is unlikely to come into contact with the recessed portion. Therefore, the shape of the recessed segment is not limited. The recessed segment can have a variety of forms. For example, the recessed segment can be formed as an arc segment recessed in a direction away from the bending portion 123.

In the above technical solution, providing two second arc segments protruding toward the bending portion 123 and a recessed segment connecting between the two second arc segments and recessed in a direction away from the bending portion 123, when the first side surface 25 abuts against the tab 12, the tab 12 only comes into contact with the protruding second arc segments. Therefore, when the adapter 20 shifts due to external factors, the first side surface 25 will not damage the tab 12, thereby reducing the probability of short circuit in the battery cell 100 and improving the operational reliability of the battery cell 100.

In some other embodiments, the first side surface 25 extends along an arc protruding toward the bending portion 123 in the circumferential direction of the adapter 20.

In the above technical solution, by setting the first side surface 25 to extend along the arc protruding toward the bending portion 123 in the circumferential direction of the adapter 20, the tab 12 can be protected more comprehensively, and the probability of damage to the tab 12 due to the deflection of the adapter 20 can be further reduced.

In some embodiments, the adapter 20 is in the shape of a flat plate.

Here, the flat plate structure is simple and easy to manufacture. Therefore, the flat plate shape of the adapter 20 can reduce the manufacturing difficulty and cost of the adapter 20.

In the above technical solution, by setting the adapter 20 to be in the shape of a flat plate, the manufacturing difficulty and manufacturing cost of the adapter 20 can be reduced, thereby reducing the overall cost of the battery cell 100.

In some embodiments, the adapter 20 includes: an adapter body and an encapsulating member, the encapsulating member covering at least a part of the periphery of the adapter body, and at least a part of the surface of the encapsulating member facing away from the adapter body being formed as the first side surface 25.

Specifically, the adapter body is the core conductive part, mainly responsible for the current transmission function; the encapsulating member is mainly used to encapsulate the edge of the adapter body, reducing the force generated by the edge of the adapter body on the tab 12, thereby reducing the damage caused by the adapter 20 to the tab 12 due to collision, wear, etc.

Here, the expression "at least a part" means that it can be partial or complete. Therefore, with the expression "the encapsulating member covers at least a part of the periphery of the adapter body", it can be understood that the encapsulating member can cover the entire periphery of the adapter body or only a part of the periphery of the adapter body. With the expression "at least a part of the surface of the encapsulating member facing away from the adapter body is formed as a first side surface 25", it can be understood that a part of the surface of the encapsulating member facing away from the adapter body is formed as the first side surface 25, or it can be understood that all the surface of the encapsulating member facing away from the adapter body is formed as the first side surfaces 25.

In the above technical solution, by providing an encapsulating member, the edge of the adapter body can be protected, thereby reducing the collision and wear of the adapter body on the tab 12 and reducing damage to the tab 12.

In some embodiments, the encapsulating member extends circumferentially along the adapter body in an annular shape and completely encapsulates the periphery of the adapter body.

In the above technical solution, by setting the encapsulating member to extend circumferentially along the adapter body in an annular shape and completely encapsulate the periphery of the adapter body, the encapsulating member can protect the tab 12 from a plurality of directions. This ensures that even if when the tab 12 is connected to the adapter 20, the adapter 20 rotates or shifts due to external factors, it will not damage the tab 12. At the same time, this can also make the adapter 20 more visually complete and uniform, increasing the aesthetics of the adapter 20.

In some embodiments, in the thickness direction of the adapter body, the two ends of the encapsulating member extend respectively to the two side surfaces of the adapter body in the thickness direction.

In the above technical solution, by extending the two ends of the encapsulating member respectively to the two side surfaces of the adapter body in the thickness direction, the contact area between the encapsulating member and the adapter body can be increased, thereby increasing the stability of connection between the encapsulating member and the adapter body and reducing the risk of the encapsulating member falling off from the adapter body.

In some embodiments, the encapsulating member is a flexible material member.

Here, the flexible material refers to a material that has a certain degree of elasticity or flexibility and can deform within a certain range without being easily damaged. The flexible material can include a variety of materials, such as silica gel and nitrile rubber.

In the above technical solution, by setting the encapsulating member to be a flexible material member, since the flexible material member can undergo elastic deformation, the encapsulating member can adapt to various installation conditions, thereby improving the encapsulating flexibility of the encapsulating member and increasing the applicability of the encapsulating member. At the same time, since the flexible material can also absorb and disperse the interaction force between the adapter 20 and the tab 12 to a certain extent, the force exerted by the adapter body on the tab 12 or the force exerted by the tab 12 on the adapter body can be reduced, thereby further reducing the risk of damage at the abutting position between the adapter body and the tab 12.

In some embodiments, the encapsulating member is a rubber member, a silica gel member, or an ABS (Acrylonitrile Butadiene Styrene) plastic member.

Specifically, the encapsulating member can be a rubber member, or a silica gel member, or an ABS plastic member. Here, the rubber member is made of rubber, which has certain elasticity, temperature resistance, chemical corrosion resistance and electrical insulation properties. At the same time, the price of rubber material is relatively low. Therefore, the use of rubber for the encapsulating member can reduce the manufacturing cost of the encapsulating member and make it suitable for the internal environment of the battery cell 100, thus ensuring the service life of the encapsulating member.

The silica gel member is made of silica gel, a high-performance synthetic rubber with excellent high-temperature resistance, corrosion resistance, and insulation properties. Therefore, using a silica gel member as the encapsulating member can increase the service life of the encapsulating member while still meeting the operational requirements of the encapsulating member.

ABS is an engineering plastic that combines the hardness of acrylonitrile, the toughness of butadiene, and the processability of styrene; therefore, an ABS plastic member has certain mechanical strength, impact resistance, and corrosion resistance. Furthermore, using an ABS plastic member as the encapsulating member makes the encapsulating member easy to process, which in turn increases the manufacturing rate of the adapter 20.

In the above technical solution, by setting the encapsulating member to be a rubber member, a silica gel member or an ABS plastic member, the possibility of the encapsulating member being corroded by electrolyte can be reduced, the reliability of the encapsulating member throughout the entire life cycle of the battery cell 100 can be improved, and the service life of the encapsulating member can be increased; at the same time, the production cost of the encapsulating member can be reduced, thereby reducing the production cost of the battery cell 100.

Referring to FIG. 6 again, in some embodiments, the adapter 20 has two first side surfaces 25, the two first side surfaces 25 being arranged opposite to each other in the width direction of the adapter 20.

It can be understood that two tabs 12 are connected to one adapter 20 correspondingly, and the two tabs 12 are respectively folded on two sides of the adapter 20 in the width direction and electrically connected to the first surface 23 of the adapter 20. Here, the two tabs 12 can be tabs 12 of the same polarity.

In the above technical solution, by setting the adapter 20 to have two first side surfaces 25, and the two first side surfaces 25 are arranged opposite to each other in the width direction of the adapter 20, the adapter 20 can be electrically connected to the two tabs 12, and a certain gap is formed between the two tabs 12, so that the two tabs 12 will not come into contact, thereby reducing the risk of short circuit of the battery cell 100.

Referring to FIG. 6 again, in some embodiments, the circumferential side surface further includes a second side surface 26 and a third side surface 27. In the circumferential direction of the adapter 20, the second side surface 26 and the third side surface 27 are respectively arranged at two ends of the first side surface 25 and are connected to the first side surface 25 at an angle. Both the second side surface 26 and the third side surface 27 are arcuately connected to the first side surface 25.

Here, the expression "the second side surface 26 and the third side surface 27 are connected to the first side surface 25 at an angle" is intended to indicate that the first side surface 25, the second side surface 26, and the third side surface 27 are not in the same plane. The expression "both the second side surface 26 and the third side surface 27 are arcuately connected to the first side surface 25" is intended to indicate that the corners where the first side surface 25 is connected to the second side surface 26 and the first side surface 25 is connected to the third side surface 27 are curved surfaces.

In the above technical solution, by setting both the second side surface 26 and the third side surface 27 to be arcuately connected to the first side surface 25, the sharp points at the periphery of the adapter 20 can be further reduced, and the possibility of damage to the tab 12 caused by the adapter 20 can be further reduced.

Referring to FIG. 5 again, in some embodiments, the adapter 20 is formed as a single-layer plate.

It can be understood that, the adapter 20 has only one layer in its basic construction instead of a complex multi-layer stacking design.

In the above technical solution, by setting the adapter 20 to be formed as a single-layer plate, the thickness of the adapter 20 can be reduced, thereby reducing the space occupied by the adapter 20. This can increase the arrangement space of the electrode assembly 10 in the case of the battery 1000, thereby increasing the energy density of the battery cell 100. At the same time, the single-layer plate has a simple structure and low cost, which can also reduce the production cost of the adapter 20, thereby reducing the production cost of the whole battery cell 100.

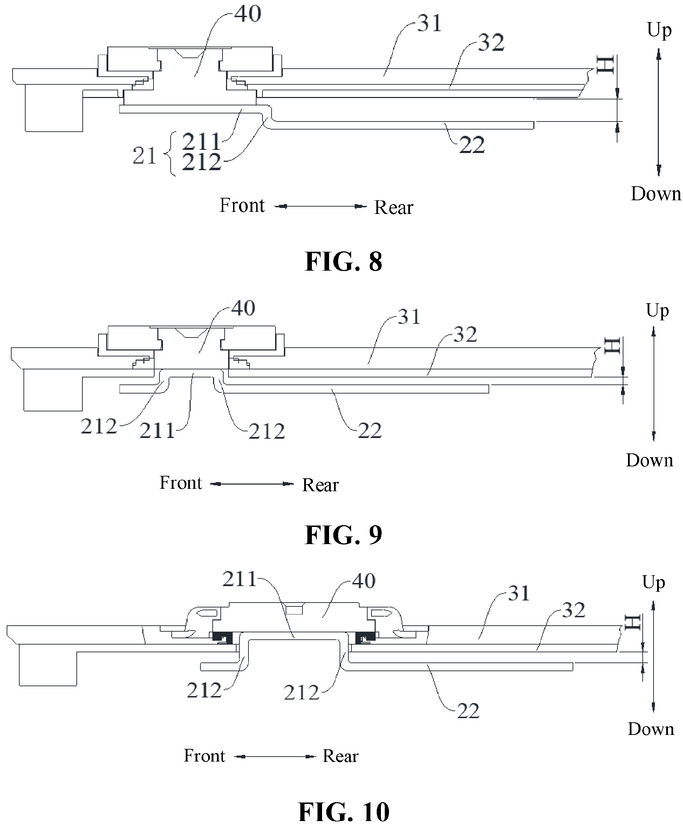

Referring to FIGS. 6 to 10 again, FIG. 6 is a schematic partial view of a battery cell 100 from another perspective provided by some embodiments of the present application; FIG. 7 is a schematic partial view of a battery cell 100 from yet another perspective provided by some embodiments of the present application; FIG. 8 is a schematic partial view of a battery cell 100 provided by some other embodiments of the present application; FIG. 9 is a schematic partial view of a battery cell 100 provided by yet some other embodiments of the present application; and FIG. 10 is a schematic partial view of a battery cell 100 provided by still some other embodiments of the present application. In some embodiments, the adapter 20 includes: a third connecting portion 21 and a fourth connecting portion 22. The third connecting portion 21 is used for electrical connection with the terminal post 40 of the battery cell 100. The fourth connecting portion 22 is fixedly connected to the third connecting portion 21 and the fourth connecting portion 22 is used for electrical connection with the tab 12.

Specifically, the adapter 20 is used to connect the terminal post 40 and the tab 12, and mainly serves to transmit current. Here, when the battery cell 100 is discharging, the adapter 20 is used to transmit the current transmitted by the tab 12 to the terminal post 40. When the battery cell 100 is charging, the adapter 20 is used to transmit the current input by the terminal post 40 to the tab 12, and then transmit it to the electrode body 11 through the tab 12.

In the above technical solution, by providing the third connecting portion 21 and the fourth connecting portion 22, the connection positions between the tab 12 and the terminal post 40 and the adapter 20 can be limited respectively, which can increase the assembly convenience of the battery cell 100.

Referring to FIG. 7 again, in some embodiments, both the third connecting portion 21 and the fourth connecting portion 22 are sheet-shaped, and the third connecting portion 21 and the fourth connecting portion 22 are arranged in the same plane.

In other words, the adapter 20 is formed into a flat plate shape.

In the above technical solution, by setting both the third connecting portion 21 and the fourth connecting portion 22 to be sheet-shaped, and arranging the third connecting portion 21 and the fourth connecting portion 22 in the same plane, the adapter 20 is formed into a flat plate shape. The flat plate shape has a simple structure and is easy to manufacture, thereby reducing the manufacturing cost of the adapter 20 and increasing the manufacturing rate of the adapter 20.

Referring to FIGS. 8 to 10, in some embodiments, a part of the adapter 20 protrudes toward the terminal post 40 to be formed as a third connecting portion 21.

As can be understood, the third connecting portion 21 is formed as a part protruding toward the terminal post 40, so that the third connecting portion 21 can be connected to the terminal post 40 more tightly. This increases the tightness of the connection between the adapter 20 and the terminal post 40 and improves the reliability of current transmission between the adapter 20 and the terminal post 40.

Furthermore, the protruded third connecting portion 21 can be formed by processes such as stamping and folding.

In the above technical solution, by setting a part of the adapter 20 to protrude toward the terminal post 40 to be formed as a third connecting portion 21, the third connecting portion 21 can be connected to the terminal post 40 more tightly. This increases the tightness of the connection between the adapter 20 and the terminal post 40 and improves the reliability of current transmission between the adapter 20 and the terminal post 40.

Referring to FIG. 8 again, in some embodiments, the third connecting portion 21 includes a connecting body 211 and a bent segment 212, the connecting body 211 being arranged on the side of the fourth connecting portion 22 facing the terminal post 40, and the bent segment 212 extending along the thickness direction of the adapter 20 and being connected to the connecting body 211 and the fourth connecting portion 22 respectively at two ends.

Specifically, the connecting body 211 is mainly used to connect the terminal post 40, and the bent segment 212 is used to connect the connecting body 211 and the fourth connecting portion 22, ensuring that the current can flow smoothly from the connecting body 211 to the fourth connecting portion 22 or from the fourth connecting portion 22 to the connecting body 211.

The connecting body 211 is arranged on the side of the fourth connecting portion 22 facing the terminal post 40, and the bent segment 212 extends along the thickness direction of the adapter 20. It can be understood that a certain gap is formed between the connecting body 211 and the fourth connecting portion 22 in the thickness direction of the adapter 20. This can increase the adaptability of the third connecting portion 21 without affecting the fixed connection between the adapter 20 and the tab 12, so that the third connecting portion 21 can adapt to different types of terminal posts 40.

By way of example, for example, referring to FIG. 8, one end of the terminal post 40 is disposed in the accommodating cavity of the battery cell 100 and connected to the connecting body 211. One end of the bent segment 212 is connected to one end of the connecting body 211, and the other end extends along the thickness direction of the adapter 20 toward one side of the electrode body 11 and is connected to the fourth connecting portion 22. The connecting body 211 is connected to the fourth connecting portion 22 through the bent segment 212 to form a Z-shape. Referring to FIGS. 9 to 10, the terminal post 40 is disposed in the through hole of the cover plate 31 of the battery cell 100. The connecting body 211 is fixedly connected to the terminal post 40. There are two bent segments 212. One end of each of the two bent segments 212 is connected to one end of the connecting body 211, and the other end extends along the thickness direction of the adapter 20 toward one side of the electrode body 11 to avoid the side wall of the through hole and is connected to the fourth connecting portion 22. The connecting body 211 is connected to the fourth connecting portion 22 through the bent segment 212 to form an Ω-like shape.

In the above technical solution, by providing a bent segment 212, a certain gap can be formed between the connecting body 211 and the fourth connecting portion 22 in the thickness direction of the adapter 20. This can increase the adaptability of the third connecting portion 21 without affecting the fixed connection between the adapter 20 and the tab 12, so that the third connecting portion 21 can adapt to different types of terminal posts 40.

In some embodiments, the number of the fourth connecting portions 22 is two, wherein the two fourth connecting portions 22 are connected and arranged side by side on the same side of the third connecting portion 21; or, the two fourth connecting portions 22 are arranged on opposite sides of the third connecting portion 21.

It can be understood that in some specific embodiments, the two fourth connecting portions 22 are connected and arranged side by side on the same side of the third connecting portion 21. In this case, the third connecting portion 21 and the fourth connecting portion 22 are respectively arranged at two ends of the adapter 20. This can further reduce the probability of interference between the tab 12 and the terminal post 40 when they are connected to the adapter 20, and further improve the convenience of connection between the tab 12 and the terminal post 40 and the adapter 20.

In some other specific embodiments, the two fourth connecting portions 22 are arranged on opposite sides of the third connecting portion 21. In this case, the third connecting portion 21 is arranged in the middle between the two fourth connecting portions 22, which can increase the compactness of the connection between the tab 12, the terminal post 40 and the adapter 20.

In the above technical solution, by providing two fourth connecting portions 22, the connecting piece can be electrically connected to the two tabs 12. This can disperse the current density, reduce local resistance, thereby improving the current conduction efficiency during high-current charging and discharging, reducing heat generation, and improving the performance of the battery cell 100. By setting the two fourth connecting portions 22 to be connected and arranged side by side on the same side of the third connecting portion 21, or by arranging the two fourth connecting portions 22 on opposite sides of the third connecting portion 21, the adapter 20 can be designed according to the actual arrangement requirements inside the battery cell 100, so that it can meet the requirements of various battery cells 100, thus increasing the applicability of the adapter 20.

In some embodiments, a foolproof structure 29 is formed on the adapter 20, and the foolproof structure 29 is suitable for providing the adapter 20 with foolproof during assembly.

Here, the foolproof structure 29 is mainly used to ensure that the adapter 20 can be installed correctly, reducing the occurrence of electrical connection failures, short circuits, etc. caused by incorrect installation direction, reversed positions of the positive electrode adapter 20 and the negative electrode adapter 20, and the like.

It should be noted that the foolproof structure 29 can include a variety of types. For example, a directional mark can be formed on the adapter 20, or a structure such as a protrusion or depression can be formed on one side of the adapter 20, so that the structure such as the protrusion or depression thereof can cooperate with the battery manufacturing process apparatus to achieve the foolproof function.

In the above technical solution, by forming a foolproof structure 29 on the adapter 20, it can be ensured that the adapter 20 can be installed correctly, reducing the occurrence of electrical connection failures, short circuits, etc. caused by incorrect installation direction, reversed positions of the positive electrode adapter 20 and the negative electrode adapter 20, and the like.

In some embodiments, the foolproof structure 29 is formed on one side periphery of the adapter 20.

It can be understood that the foolproof structure 29 can be formed on any side edge of the adapter 20. In this way, the foolproof structure 29 will not occupy a large space and will not affect the electrical connection between the adapter 20 and the terminal post 40 and the tab 12.

In the above technical solution, by setting the foolproof structure 29 to be formed on one side periphery of the adapter 20, the production of the adapter 20 can be facilitated and the production difficulty of the adapter 20 can be reduced. At the same time, the foolproof structure 29 will not affect the electrical connection between the adapter 20 and the terminal post 40 and the tab 12, thereby ensuring stability of the electrical connection in the battery cell 100.

In some embodiments, the foolproof structure 29 is formed on the side periphery of the adapter 20 facing away from the first side surface 25.

In the above technical solution, by setting the foolproof structure 29 to be formed on the side periphery of the adapter 20 facing away from the first side surface 25, the foolproof structure 29 will not affect the first side surface 25. In this way, while ensuring that the adapter 20 can be installed correctly, the stress at the contact position between the adapter 20 and the tab 12 can be effectively reduced, thereby reducing the probability of damage to the tab 12 caused by the adapter 20.

In some embodiments, the adapter 20 includes a third connecting portion 21 and a fourth connecting portion 22. The third connecting portion 21 is fixed and electrically connected to the terminal post 40, and the fourth connecting portion 22 is fixed and electrically connected to the second connecting portion 122 of the tab 12. In the circumferential direction of the adapter 20, the side of the fourth connecting portion 22 facing the bending portion 123 is formed as a first side surface 25, the side of the fourth connecting portion 22 adjacent to the first side surface 25 is formed as a third side surface 27, and the side of the fourth connecting portion 22 facing away from the first side surface 25 is formed as a fourth side surface 28. The third side surface 27 connects the first side surface 25 and the fourth side surface 28. The number of the fourth connecting portions 22 is two. The third side surface 27 and the fourth side surface 28 of one of the fourth connecting portions 22 are rounded, and the third side surface 27 and the fourth side surface 28 of the other fourth connecting portion 22 are chamfered to form a foolproof structure 29.

It can be understood that in the above embodiment, only one foolproof structure 29 is formed on the adapter 20, and is formed as a chamfer at the corner of the fourth connecting portion 22. Here, the chamfer has a relatively simple structure and is easy to manufacture, which can reduce the manufacturing difficulty of the adapter 20 and the manufacturing cost of the adapter 20. Meanwhile, the chamfer is formed at the connection between the third side surface 27 and the fourth side surface, so that the foolproof structure 29 will not affect the connection between the tab 12 and the adapter 20, nor will it affect the configuration of other structures of the battery cell 100.

In the above technical solution, by setting the third side surface 27 and the fourth side surface 28 of the fourth connecting portion 22 to be chamfered to form a foolproof structure 29, the manufacturing difficulty of the adapter 20 can be reduced, thereby reducing the manufacturing cost of the adapter 20 and increasing the manufacturing rate of the adapter 20; at the same time, while ensuring that the adapter 20 can be installed correctly, the foolproof structure 29 will not affect the connection between the tab 12 and the adapter 20, thereby ensuring stability of the electrical connection of the battery cell 100.

Referring to FIGS. 1 and 7 to 10 again, in some embodiments, the battery cell 100 further includes an end cover assembly 30 and a terminal post 40. The end cover assembly 30 includes an end cover 31 and a first insulating member 32. The first insulating member 32 is arranged on the side of the end cover 31 facing the electrode assembly 10. The terminal post 40 passes through the end cover assembly 30 and is fixed and electrically connected to the adapter 20.

Specifically, the end cover assembly 30 is an important part of the encapsulation structure of the battery cell 100 to close the top opening of the case of the battery cell 100 and protect the internal structure from the influence of the external environment. Here, the end cover 31 is the main part of the end cover assembly 30. It is directly connected to the open end of the case and mainly provides the physical protection and sealing function. Without limitation, the shape of the end cover 31 can be adapted to the shape of the case to be mated to the case. Optionally, the end cover 31 can be made of a material (such as an aluminum alloy) with certain hardness and strength, so that the end cover 31 is not easy to deform when being crushed and collided, the battery cell 100 can have higher structural strength and improved safety performance. The first insulating member 32 is arranged on the side of the end cover 31 facing the electrode assembly 10, and is mainly used to isolate the end cover 31 from the electrical connection components inside the case, so as to reduce the risk of short circuit. By way of example, the first insulating member 32 may be made of plastic, rubber, or the like.

The terminal post 40 is the bridge connecting the internal electrodes of the battery 1000 to the external circuit. Through the terminal post 40, the chemical energy inside the battery 1000 can be converted into usable electric energy output.

Optionally, the battery cell 100 further includes a case. The case is an assembly used for mating with the end cover 31 to form the internal environment of the battery cell 100, where the formed internal environment can be used for accommodating the electrode assembly 10 and other components. The case and the end cover 31 may be independent components, an opening may be provided in the case, and the end cover 31 covers the opening at the opening to form the internal environment of the battery cell 100. Without limitation, the end cover 31 and the case may alternatively be integral. Specifically, the end cover 31 and the case may form a common connection surface before other components are placed into the case. When it is necessary to encapsulate the interior of the case, the end cover 31 is enabled to cover the case. The case can be of various shapes and various sizes, such as a rectangular solid shape, a cylinder shape, and a hexagonal prism shape. Specifically, the shape of the case may be determined according to the specific shape and dimension of the electrode assembly 10. The case may be made of a variety of materials, including, without limitation, copper, iron, aluminum, stainless steel, an aluminum alloy, plastic, and the like.

The adapter 20 includes a third connecting portion 21 and a fourth connecting portion 22, the third connecting portion 21 being fixed and electrically connected to the terminal post 40, and the fourth connecting portion 22 being fixed and electrically connected to the second connecting portion 122 of the tab 12; wherein the gap H between the first insulating member 32 and the fourth connecting portion 22 is greater than the thickness of the second connecting portion 122 of the tab 12.

In the above technical solution, by setting the gap between the first insulating member 32 and the fourth connecting portion 22 to be greater than the thickness of the second connecting portion 122 of the tab 12, it can be ensured that the tab 12 will not abut against the first insulating member 32. This can effectively prevent the adapter 20 from moving toward one side of the electrode body 11 due to abutting of the tab 12 against the first insulating member 32, thereby further improving the tightness of the connection between the third connecting portion 21 and the terminal post 40.

Referring to FIGS. 5 and 7 to 10 again, in some embodiments, the ratio of the gap between the first insulating member 32 and the fourth connecting portion 22 to the thickness of the second connecting portion 122 of the tab 12 is greater than or equal to 1.2.

For example, the ratio of the gap H between the first insulating member 32 and the fourth connecting portion 22 to the thickness T2 of the second connecting portion 122 of the tab 12 can be 1.2, 1.3, 1.4 or greater.

In the above technical solution, by setting the ratio of the gap between the first insulating member 32 and the fourth connecting portion 22 to the thickness of the second connecting portion 122 of the tab 12 greater than or equal to 1.2, it can be further ensured that the tab 12 will not abut against the first insulating member 32, thereby reducing the probability of damage to the tab 12 due to crushing. At the same time, it can also further prevent space from being produced between the third connecting portion 21 and the terminal post 40 and affecting the tightness of the connection between the third connecting portion 21 and the terminal post 40, thereby ensuring the transmission stability of the adapter 20 and improving the operational reliability of the battery cell 100.

In some embodiments, the third connecting portion 21 is connected to the terminal post 40 by laser welding; and the fourth connecting portion 22 is connected to the second connecting portion 122 of the tab 12 by ultrasonic welding.

Here, laser welding is a method that uses a high-energy laser beam as a heat source for welding. It features fast welding speed, high precision, large weld depth-to-width ratio, and small heat-affected zone. Therefore, the third connecting portion 21 is connected to the terminal post 40 by laser welding, which can the mechanical strength between the terminal post 40 and the adapter 20, and at the same time reduce the impact of the heat generated during the welding of the terminal post 40 and the adapter 20 on the properties of the surrounding materials.

Ultrasonic welding is a method that uses the frictional heat generated by high-frequency mechanical vibration to melt the contact interface of workpieces, thereby achieving welding. Here, ultrasonic welding has the advantages of non-contact, requiring no filler material, a short welding time, and low energy consumption. Therefore, the fourth connecting portion 22 and the second connecting portion 122 of the tab 12 are connected by ultrasonic welding, which can effectively improve the welding quality and efficiency of the adapter 20 and the tab 12, and ensure the reliability and stability of the connection between the adapter 20 and the tab 12.

In the above technical solution, the third connecting portion 21 is connected to the terminal post 40 by laser welding, and the fourth connecting portion 22 is connected to the second connecting portion 122 of the tab 12 by ultrasonic welding. This can increase the quality of the welding between the adapter 20 and the terminal post 40 and the tab 12, and improve stability of the connection between the adapter 20 and the terminal post 40 and the tab 12.

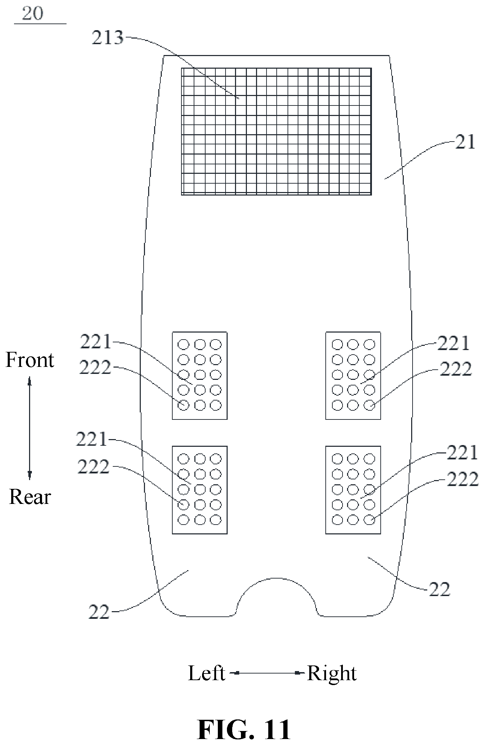

Referring to FIG. 11, in some embodiments, the third connecting portion 21 has at least one first welding area 213, and the third connecting portion 21 is welded and connected to the terminal post 40 through the first welding area 213; and the fourth connecting portion 22 has at least one second welding area 221, and the fourth connecting portion 22 is welded and connected to the tab 12 through the second welding area 221.

It can be understood that there may be one or more first welding areas 213, for example, the number of the first welding areas may be one, two, three or more. There may be one or more second welding areas 221, for example, the number of the second welding areas may be one, two, three or more.

In the above technical solution, by providing a first welding area 213 and a second welding area 221, the welding position between the adapter 20 and the tab 12 and the terminal post 40 can be further defined, making the welding position more precise, thereby further increasing the convenience and reliability of the connection between the adapter 20 and the tab 12 and the terminal post 40; at the same time, a plurality of first welding areas 213 and a plurality of second welding areas 221 can also increase the welding area between the adapter 20 and the terminal post 40 and the tab 12, thereby increasing stability of the welding between the adapter 20 and the tab 12 and the terminal post 40.

In some embodiments, a plurality of welding grooves 222 arranged in an array are formed in the second welding area 221 by welding.

Here, arrangement in an array refers to an orderly and regular geometric layout, which usually refers to a plurality of identical or similar units arranged repeatedly in a certain pattern to form a neat and uniform structural layout. Thus, with the expression "a plurality of welding grooves 222 arranged in an array are formed in the second welding area 221 by welding", it can be understood that after the tab 12 and the adapter 20 are ultrasonically welded, a plurality of welding grooves 222 evenly arranged are formed in the second welding area 221. Since ultrasonic welding is pressure welding, the position of the welding groove 222 is the position of the weld point, and the plurality of welding grooves 222 are the plurality of weld points. Therefore, the tab 12 and the adapter 20 are connected by the plurality of weld points, and the plurality of weld points are evenly arranged.

In the above technical solution, with the expression "a plurality of welding grooves 222 arranged in an array are formed in the second welding area 221 by welding", it can be understood that the tab 12 and the adapter 20 are connected by a plurality of weld points. The plurality of weld points can effectively disperse the current density, reduce resistance, and prevent welding failure caused by local overheating. Therefore, the formation of a plurality of welding grooves 222 arranged in an array in the second welding area 221 can significantly improve the energy transmission efficiency and overall reliability of the battery cell 100.

In some embodiments, the welding groove 222 is a square groove or a hemispherical groove.

It can be understood that the welding groove 222 can be a square groove or a hemispherical groove. Here, the shape of the welding groove 222 is related to the shape of the welding teeth of the ultrasonic welding head. When the welding teeth are spherical, a hemispherical welding groove 222 is formed; and when the welding teeth are rectangular, a square welding groove 222 is formed.

In the above technical solution, by making the welding groove 222 a square groove or a hemispherical groove, the ultrasonic welding head can be selected according to the actual situation of the tab 12 and the adapter 20. This can further improve the quality of the welding between the tab 12 and the adapter 20 and reduce the risk of product damage.

Referring to FIG. 5 again, in some embodiments, the battery cell 100 further includes a protective sheet 50, the protective sheet 50 being provided on the side of the second connecting portion 122 of the tab 12 facing away from the electrode body 11 and connected to the second connecting portion 122 of the tab 12.

Specifically, the protective sheet 50 covers the second connecting portion 122 of the tab 12 and is fixedly connected to the adapter 20 together with the second connecting portion 122 of the tab 12. In this case, this is equivalent to the protective sheet 50 increasing the thickness of the second connecting portion 122 of the tab 12, that is, increasing the structural strength of the tab 12. It should be noted that, in normal circumstances, the tab 12 and the adapter 20 are connected by welding. The protective sheet 50 covers the side of the second connecting portion 122 of the tab 12 facing away from the electrode body 11. Thus, the protective sheet 50 can disperse the force exerted by the welding head on the tab 12, thereby reducing the risk of the tab 12 cracking during the welding process.

Optionally, the protective sheet 50 is a metal member made of metal material. Here, the metal material can be of various types, for example, it can be at least one of stainless steel, nickel, nickel-plated copper, copper and aluminum.

In the above technical solution, by providing a protective sheet 50, the tab 12 can be protected when the tab 12 is being welded and connected to the adapter 20, reducing the risk of the tab 12 cracking during the welding process, and thus reducing the probability of damage to the battery cell 100 during assembly.

In a second aspect, an embodiment of the present application further provides a battery 1000, which comprises the battery cell 100 according to the first aspect of the present application.

The battery 1000 according to the present application is provided with the battery 1000 in the above first aspect, thereby improving the overall performance of the electrical apparatus.

In a third aspect, an embodiment of the present application further provides an electrical apparatus, which comprises the battery 1000 according to the second aspect of the present application, and the battery 1000 is configured to provide electric energy.

The electrical apparatus according to the present application is provided with the battery 1000 in the above second aspect, thereby improving the overall performance of the electrical apparatus.

The battery cell 100 according to three specific embodiments of the present application is described below with reference to FIGS. 4-11.

### Embodiment 1

Referring to FIG. 4, the battery cell 100 includes a case, an electrode assembly 10, an adapter 20, a cover plate assembly 30, a terminal post 40 and a protective sheet 50. Here, the case has a accommodating cavity, in which the electrode assembly 10, the adapter 20, and the protective sheet 50 are all disposed. The electrode assembly 10 includes an electrode body 11 and a tab 12. The first end 121 of the tab 12 is connected to the electrode body 11, and the second end 122 extends from the circumferential side of the adapter 20 to the upper surface of the adapter 20 and is electrically connected to the upper surface of the adapter 20. The protective sheet 50 is disposed on the upper surface of the second end 122 of the tab 12 and is fixedly connected to the tab 12 and the adapter 20. The cover plate assembly 30 has a through hole, and one end of the terminal post 40 is disposed in the accommodating cavity and electrically connected to the upper surface of the adapter 20, while the other end extends through the through hole to the outside of the cover plate assembly 30.

Specifically, the adapter 20 has a first side surface 25, a second side surface 26 and a third side surface 27. Here, the first side surface 25 is connected between the upper and lower surfaces of the adapter 20 and sandwiched between the first end 121 and the second end 122 of the tab 12. The second side surface 26 and the third side surface 27 are respectively arranged at two ends of the first side surface 25 in the circumferential direction of the adapter 20 and are connected to the first side surface 25 at an angle. Furthermore, the first side surface 25 is arcuately connected to both the upper and lower surfaces, and in the circumferential direction of the adapter 20, the first side surface 25 is formed as an outwardly convex arc surface, and the ratio of the radius of the fillet between the first side surface 25 and the first surface 23 and the second surface 24 to the thickness of the adapter 20 is 1/2; and the second side surface 26 and the third side surface 27 are both arcuately connected to the first side surface 25.

Furthermore, the adapter 20 includes a third connecting portion 21 and a fourth connecting portion 22. The third connecting portion 21 is used for electrical connection with the terminal post 40, and the fourth connecting portion 22 is used for electrical connection with the tab 12. Here, there are two fourth connecting portions 22, and the two fourth connecting portions 22 are arranged side by side and connected to one end of the third connecting portion 21 in the front-rear direction. The adapter 20 is a single-layer plate, and both the third connecting portion 21 and the fourth connecting portion 22 are sheet-shaped and the third connecting portion 21 and the fourth connecting portion 22 are arranged in the same plane.

Specifically, the third connecting portion 21 has a first welding area 213, and the third connecting portion 21 and the terminal post 40 are connected by laser welding in the first welding area 213; the fourth connecting portion 22 has a plurality of second welding areas 221, and the fourth connecting portion 22 and the second end 122 of the tab 12 are connected by ultrasonic welding in the plurality of second welding areas 221.

In addition, the cover plate assembly 30 includes a cover plate 31 and a first insulating member 32, the gap between the first insulating member 32 and the fourth connecting portion 22 being greater than the thickness of the second end 122 of the tab 12.

In the battery cell 100 according to the embodiments of the present application, by setting the second connecting portion 122 of the tab 12 to be fixed and electrically connected to the first surface 23, the redundancy of the tab 12 can be reduced, the compactness of the structure can be increased, and thus the energy density of the battery cell can be improved. At the same time, the probability of the second connecting portion 122 of the tab 12 coming into contact with the electrode body 11 can be reduced, thereby effectively reducing the short circuit of the battery cell 100 caused by the redundancy, sagging, loosening and other problems of the tab 12, thus effectively improving the performance and service life of the battery cell 100.

### Embodiment 2

Referring to FIG. 8, the structure of this embodiment is substantially the same as that of Embodiment 1, where the same components are referred to by the same reference numerals. The only difference is that the third connecting portion 21 and the fourth connecting portion 22 described in Embodiment 1 are in the same plane, while the third connecting portion 21 described in this Embodiment 2 is located on the side of the fourth connecting portion 22 facing away from the electrode body 11.

Specifically, the third connecting portion 21 includes a connecting body 211 and a bent segment 212. The connecting body 211 is arranged on the side of the fourth connecting portion 22 facing the terminal post 40. The bent segment 212 extends along the thickness direction of the adapter 20 and its two ends are respectively connected to the connecting body 211 and the fourth connecting portion 22. This can increase the adaptability of the third connecting portion 21 without affecting the fixed connection between the adapter 20 and the tab 12, so that the third connecting portion 21 can adapt to different types of terminal posts 40.

### Embodiment 2

Referring to FIGS. 9 and 10, the structure of this embodiment is substantially the same as that of Embodiment 2, where the same components are referred to by the same reference numerals. The only difference is that Embodiment 1 includes one bent segment 212 while Embodiment 2 includes two bent segments 212.

Specifically, the third connecting portion 21 includes a connecting body 211 and a bent segment 212. The connecting body 211 is arranged on the side of the fourth connecting portion 22 facing the terminal post 40 and is fixedly connected to the terminal post 40. There are two bent segments 212. One end of each of the two bent segments 212 is connected to one end of the connecting body 211, and the other end extends along the thickness direction of the adapter 20 toward one side of the electrode body 11 to avoid the sidewall of the through hole and is connected to the fourth connecting portion 22. The connecting body 211 is connected to the fourth connecting portion 22 through the bent segments 212 to form an Ω-like shape.

Finally, it is to be noted that the above embodiments are merely used for illustrating the technical solutions of the present application, not for limiting them. Although the present application is described in detail with reference to the foregoing embodiments, those of ordinary skill in the art should understand that they may still modify the technical solutions described in the foregoing embodiments, or equivalently substitute some or all of the technical features therein. These modifications or substitutions do not cause the essence of the corresponding technical solutions to depart from the scope of the technical solutions of the embodiments of the present application, and they should be covered by the scope of the claims and specification of the present application. In particular, the technical features mentioned in the various embodiments may be combined in any manner provided that there is no structural conflict. The present application is not limited to the particular Examples disclosed herein, but rather includes all technical solutions falling within the scope of the claims.

## Claims

1. A battery cell, comprising:
an electrode assembly (10) comprising an electrode body (11) and a tab (12), the tab (12) comprising a first connecting portion (121), a bending portion (123), and a second connecting portion (122), the first connecting portion (121) being connected to the electrode body (11), and the first connecting portion (121) and the second connecting portion (122) being connected by means of the bending portion (123); and
an adapter (20), two side surfaces of the adapter (20) in a thickness direction being respectively a first surface (23) and a second surface (24), the first surface (23) being located on the side of the second surface (24) facing away from the electrode body (11), the first connecting portion (121) being arranged close to the second surface (24), the bending portion (123) being bent around the periphery of the adapter (20), and the second connecting portion (122) being arranged close to the first surface (23) and (122) being fixed and electrically connected to the first surface (23).

2. The battery cell according to claim 1, wherein the adapter (20) has a circumferential side surface connected between the first surface (23) and the second surface (24),
wherein a portion of the circumferential side surface facing the bending portion (123) is a first side surface (25), and the first side surface (25) is arcuately connected to both the first surface (23) and the second surface (24).

3. The battery cell according to claim 2, wherein at least a part of the first side surface (25) extends along an arc protruding toward the bending portion (123) in a circumferential direction of the adapter (20).

4. The battery cell according to claim 2 or 3, wherein the circumferential side surface is arcuately connected to both the first surface (23) and the second surface (24).

5. The battery cell according to any one of claims 2 to 4, wherein a ratio of the radius of the fillet connecting the first side surface (25) to the first surface (23) and the second surface (24) to a thickness of the adapter (20) ranges from 1/4 to 1/2.

6. The battery cell according to any one of claims 2 to 5, wherein the ratio of the radius of the fillet between the first side surface (25) and the first surface (23) and the second surface (24) to the thickness of the adapter (20) is 1/2.

7. The battery cell according to any one of claims 3 to 6, wherein in the circumferential direction of the adapter (20), the first side surface (25) comprises: a first arc segment and a straight segment, the number of the first arc segments is two, the two first arc segments extend along an arc protruding toward the bending portion (123), and the straight segment connects between the two first arc segments and is tangent to the two first arc segments; or
in the circumferential direction of the adapter (20), the first side surface (25) comprises: a second arc segment and a recessed segment, the number of the second arc segments is two, the two second arc segments extend along an arc protruding toward the bending portion (123), and the recessed segment is recessed in a direction away from the bending portion (123) and is connected between the two second arc segments; or
in the circumferential direction of the adapter (20), the first side surface (25) extends along an arc protruding toward the bending portion (123).

8. The battery cell according to any one of claims 1 to 7, wherein the adapter (20) is in the shape of a flat plate.

9. The battery cell according to any one of claims 2 to 7, wherein the adapter (20) comprises: an adapter body and an encapsulating member, the encapsulating member covering at least a part of the periphery of the adapter body, and at least a part of the surface of the encapsulating member facing away from the adapter body being formed as the first side surface (25).

10. The battery cell according to claim 9, wherein the encapsulating member extends circumferentially along the adapter body in an annular shape and completely encapsulates the periphery of the adapter body.

11. The battery cell according to claim 9 or 10, wherein in the thickness direction of the adapter body, the two ends of the encapsulating member extend respectively to the two side surfaces of the adapter body in the thickness direction.

12. The battery cell according to any one of claims 9 to 11, wherein the encapsulating member is a flexible material member.

13. The battery cell according to claim 12, wherein the encapsulating member is a rubber member, a silica gel member, or an ABS plastic member.

14. The battery cell according to any one of claims 2 to 7 and 9 to 13, wherein the adapter (20) has two first side surfaces (25), the two first side surfaces (25) being arranged opposite to each other in a width direction of the adapter (20).

15. The battery cell according to claim 14, wherein the circumferential side surface further comprises: a second side surface (26) and a third side surface (27), in the circumferential direction of the adapter (20), the second side surface (26) and the third side surface (27) are respectively arranged at two ends of the first side surface (25) and are connected to the first side surface (25) at an angle, and both the second side surface (26) and the third side surface (27) are arcuately connected to the first side surface (25).

16. The battery cell according to any one of claims 1 to 15, wherein the adapter (20) is formed as a single-layer plate.

17. The battery cell according to any one of claims 1 to 16, wherein the adapter (20) comprises:
a third connecting portion (21), the third connecting portion (21) being used for electrical connection with a terminal post (40) of the battery cell; and
a fourth connecting portion (22), the fourth connecting portion (22) being fixedly connected to the third connecting portion (21), the fourth connecting portion (22) being used for electrical connection with the tab (12).

18. The battery cell according to claim 17, wherein both the third connecting portion (21) and the fourth connecting portion (22) are sheet-shaped, and the third connecting portion (21) and the fourth connecting portion (22) are arranged in the same plane.

19. The battery cell according to claim 17, wherein a part of the adapter (20) protrudes toward the terminal post (40) to be formed as the third connecting portion (21).

20. The battery cell according to claim 19, wherein the third connecting portion (21) comprises: a connecting body (211) and a bent segment (212), the connecting body (211) being arranged on a side of the fourth connecting portion (22) facing the terminal post (40), the bent segment (212) extending along the thickness direction of the adapter (20), and being connected to the connecting body (211) and the fourth connecting portion (22) respectively at two ends.

21. The battery cell according to any one of claims 18 to 20, wherein the number of the fourth connecting portions (22) is two, wherein the two fourth connecting portions (22) are connected and arranged side by side on the same side of the third connecting portion (21); or, the two fourth connecting portions (22) are arranged on opposite sides of the third connecting portion (21).

22. The battery cell according to any one of claims 1 to 21, wherein a foolproof structure (29) is formed on the adapter (20), and the foolproof structure (29) is suitable for providing the adapter (20) with foolproof during assembly.

23. The battery cell according to claim 22, wherein the foolproof structure (29) is formed on a side periphery of the adapter (20).

24. The battery cell according to claim 23, wherein the foolproof structure (29) is formed on the side periphery of the adapter (20) facing away from the first side surface (25).

25. The battery cell according to claim 24, wherein the adapter (20) comprises: a third connecting portion (21) and a fourth connecting portion (22), the third connecting portion (21) being fixed and electrically connected to the terminal post (40), and the fourth connecting portion (22) being fixed and electrically connected to the second connecting portion (122) of the tab (12),
wherein in the circumferential direction of the adapter (20), the side of the fourth connecting portion (22) facing the bending portion (123) is formed as the first side surface (25), the side of the fourth connecting portion (22) adjacent to the first side surface (25) is formed as a third side surface (27), the side of the fourth connecting portion (22) facing away from the first side surface (25) is formed as a fourth side surface (28), and the third side surface (27) connects the first side surface (25) and the fourth side surface (28),
the number of the fourth connecting portions (22) is two, the third side surface (27) and the fourth side surface (28) of one of the fourth connecting portions (22) are rounded, and the third side surface (27) and the fourth side surface (28) of the other fourth connecting portion (22) are chamfered to form the foolproof structure (29).

26. The battery cell according to any one of claims 1 to 25, further comprising: an end cover assembly (30) and a terminal post (40), the end cover assembly (30) comprises an end cover (31) and a first insulating member (32), the first insulating member (32) is arranged on the side of the end cover (31) facing the electrode assembly (10), the terminal post (40) passes through the end cover assembly (30) and is fixed and electrically connected to the adapter (20);
the adapter (20) comprises: a third connecting portion (21) and a fourth connecting portion (22), the third connecting portion (21) is fixed and electrically connected to the terminal post (40), and the fourth connecting portion (22) is fixed and electrically connected to the second connecting portion (122) of the tab (12),
wherein the gap between the first insulating member (32) and the fourth connecting portion (22) is greater than a thickness of the second connecting portion (122) of the tab (12).

27. The battery cell according to claim 26, wherein a ratio of the gap between the first insulating member (32) and the fourth connecting portion (22) to the thickness of the second connecting portion (122) of the tab (12) is greater than or equal to 1.2.

28. The battery cell according to claim 26 or 27, wherein the third connecting portion (21) is connected to the terminal post (40) by laser welding; and the fourth connecting portion (22) is connected to the second connecting portion (122) of the tab (12) by ultrasonic welding.

29. The battery cell according to claim 28, wherein the third connecting portion (21) has at least one first welding area (213), the third connecting portion (21) is welded and connected to the terminal post (40) through the first welding area (213);
the fourth connecting portion (22) has at least one second welding area (221), the fourth connecting portion (22) is welded and connected to the tab (12) through the second welding area (221).

30. The battery cell according to claim 29, wherein a plurality of welding grooves (222) arranged in an array are formed in the second welding area (221) by welding.

31. The battery cell according to claim 30, wherein the welding grooves (222) are square grooves or hemispherical grooves.

32. The battery cell according to any one of claims 1 to 31, further comprising: a protective sheet (50), the protective sheet (50) being provided on the side of the second connecting portion (122) of the tab (12) facing away from the electrode body (11) and connected to the second connecting portion (122) of the tab (12).

33. A battery, comprising the battery cell according to any one of claims 1 to 32.

34. An electrical apparatus, comprising the battery according to claim 33, the battery being used for providing electric energy.
